# EUROPEAN PATENT SPECIFICATION

(11) **EP 2 196 726 B1**
(45) Date of publication and mention of the grant of the patent: **24.12.2014**
(21) Application number: 09014617.6
(22) Date of filing: 24.11.2009
(51) Int. Cl.: F21S 8/12

(54) **Vehicular illumination lamp**
Fahrzeugausleuchtungslampe
Lampe d'éclairage véhiculaire

(30) Priority: 09.12.2008 JP 2008313278
(43) Date of publication of application: 16.06.2010
(73) Proprietor: Koito Manufacturing Co., Ltd., Tokyo 108-8711 (JP)
(72) Inventor: Mochizuki, Mitsuyuki, Shizuoka-shi, Shizuoka (JP)
(74) Representative: Hoffmann Eitle

(56) References cited:
- EP-A1- 1 935 715
- US-A1- 2007 147 055
- US-A1- 2008 198 617
- US-A1- 2008 225 535

## Description

### Technical Field

The present invention relates to a vehicular illumination lamp configured so as to form an additional light distribution pattern for high beam, and particularly relates to a vehicular illumination lamp with light-emitting elements serving as a light source.

### [Related Art]

Recently, a light-emitting element such as a light-emitting diode has been increasingly employed as a light source for a vehicular illumination lamp that composes a headlamp.

For example, Patent Document 1 describes a vehicular illumination lamp that forms an additional light distribution pattern for high beam (that is, a light distribution pattern formed in addition to a low-beam distribution pattern when a high-beam distribution pattern is formed) by using a lamp unit with a plurality of light-emitting elements serving as a light source.

In the vehicular illumination lamp described in Patent Document 1, the plurality of light-emitting elements are configured to be arranged horizontally side by side with each other in the vicinity of a rear focal plane of a projection lens, and by synthesizing light distribution patterns formed as inverted projection images of these light-emitting elements, the additional light distribution pattern for high beam is formed.

In addition, Patent Document 2 discloses the preamble of claim 1 and particularly describes a lamp unit that includes a projection lens arranged on an optical axis extending in the vehicular longitudinal direction, a pair of light-emitting elements arranged facing upward and downward, respectively, in the vicinity of the optical axis on the rear side of a rear side focal point of the projection lens, a pair of reflectors that are arranged so as to cover the pair of light-emitting elements from above and below, respectively, and that reflect light from the light-emitting elements in the direction closer to the optical axis toward the front, and a double-sided mirror piece that is arranged so as to extend generally along a horizontal plane including the optical axis between the pair of reflectors and the projection lens and that is formed so that the front end edge thereof passes through the rear side focal point of the projection lens. The double-sided mirror piece is configured so as to reflect part of reflected light from the upper side reflector upward and part of reflected light from the lower side reflector downward.
[Patent Document 1]
   Japanese Patent Application Laid-Open (Kokai) No. JP-A-2007-179969
[Patent Document 2]
   Japanese Patent Application Laid-Open (Kokai) No. JP-A-2005-108554

### [Disclosure of the Invention]

### [Problem to be Solved by the Invention]

In the vehicular illumination lamp described in Patent Document 1, a plurality of light distribution patterns are formed in a horizontally parallel manner with the radiated light. Therefore, if each of the light-emitting elements is controlled to turn on and off so that the plurality of light distribution patterns do not include a light distribution pattern to be formed at a position of an oncoming vehicle or a leading vehicle, it is made possible to improve visibility of an area ahead of a vehicle without giving glare to the driver of the oncoming vehicle or the leading vehicle.

However, because these light distribution patterns are formed as inverted projection images of light-emitting chips of the light-emitting elements, it is difficult to obtain clear outlines of the side end edges of the patterns. Consequently, there is a problem that, if it is prevented to give glare to the driver of the oncoming vehicle or the leading vehicle, the light irradiation range in the area ahead of the vehicle is limited by a large degree.

In view of the situation described above, it is an object of the present invention to provide a vehicular illumination lamp that is configured so as to form an additional light distribution pattern for high beam, and is capable of improving visibility of an area ahead of a vehicle without giving glare to a driver of an oncoming vehicle or a leading vehicle.

### [Means for Solving the Problem]

The present invention intends to achieve the object by providing a configuration in which a pair of lamp units are respectively swiveled in the horizontal direction by a pair of swivel mechanisms, and in addition, by providing a configuration in which a light distribution pattern having a clear outline of the left side end edge thereof is formed with light radiated from one of the lamp units and a light distribution pattern having a clear outline of the right side end edge thereof is formed with light radiated from the other of the lamp units.

In other words, a vehicular illumination lamp according to the present invention is configured so as to form an additional light distribution pattern in addition to a low-beam distribution pattern when a high-beam distribution pattern is formed, and is characterized by including a first lamp unit that includes a projection lens arranged on an optical axis extending in the vehicular longitudinal direction, a light-emitting element arranged facing toward the left side in the vicinity of the optical axis on the rear side of a rear side focal point of the projection lens, a reflector that is arranged so as to cover the light-emitting element from the left side, and that reflects light from the light-emitting element in the direction closer to the optical axis toward the front, and a mirror member that is arranged between the reflector and the projection lens and that reflects part of reflected light from the reflector toward the left side, the mirror member being formed so that a reflective surface of the mirror member extends generally along a vertical plane including the optical axis and a front end edge of the reflective surface passes through the rear side focal point of the projection lens; a first swivel mechanism that swivels the first lamp unit in the horizontal direction; a second lamp unit that includes a projection lens arranged on an optical axis extending in the vehicular longitudinal direction, a light-emitting element arranged facing toward the right side in the vicinity of the optical axis on the rear side of a rear side focal point of the projection lens, a reflector that is arranged so as to cover the light-emitting element from the right side, and that reflects light from the light-emitting element in the direction closer to the optical axis toward the front, and a mirror member that is arranged between the reflector and the projection lens and that reflects part of reflected light from the reflector toward the right side, the mirror member being formed so that a reflective surface of the mirror member extends generally along a vertical plane including the optical axis and a front end edge of the reflective surface passes through the rear side focal point of the projection lens; and a second swivel mechanism that swivels the second lamp unit in the horizontal direction.

The "light-emitting element" above denotes a light source in the form of an element having a light emitting-chip that performs surface light emission generally in the shape of a point. However, the type of the light-emitting element is not particularly limited. For example, a light-emitting diode or a laser diode may be employed.

The specific configuration of the "mirror member" of each of the lamp units is not particularly limited as far as the mirror member is formed so that the reflective surface thereof extends generally along the vertical plane including the optical axis and the front end edge of the reflective surface passes through the rear side focal point of the projection lens.

In that situation, the "reflective surface" of each of the mirror members may be formed as the same flat surface as the vertical plane including the optical axis, or may be formed as a flat surface or a curved surface somewhat inclined from the aforementioned flat surface.

In addition, the "front end edge" of the reflective surface of each of the mirror members may obviously be formed so as to extend in the vertical direction, and may also be formed so as to extend in the direction somewhat inclined from the vertical direction.

The positional relationship between the "first lamp unit" and the "second lamp unit" is not particularly limited, and, for example, a configuration in which the lamp units are arranged laterally adjacent to each other or a configuration in which the lamp units are arranged vertically adjacent to each other may be employed.

### [Effects of the Invention]

As shown in the configuration, the vehicular illumination lamp according to the present invention is provided with the pair of projector-type lamp units in which the light-emitting elements and the reflectors are arranged in the rear of the projection lenses. Of these lamp units, the first lamp unit is configured such that the mirror member that is arranged between the reflector and the projection lens reflects part of reflected light from the reflector toward the left side, and on the other hand, the second lamp unit is configured such that the mirror member that is arranged between the reflector and the projection lens reflects part of reflected light from the reflector toward the right side. In addition, the reflective surface of the mirror member in each of these lamp units is formed so as to extend generally along the vertical plane including the optical axis and so that the front end edge of the reflective surface passes through the rear side focal point of the projection lens. Therefore, the following effects can be obtained.

In other words, a first light distribution pattern formed with the reflected light from the reflector of the first lamp unit is formed with a vertical cut-off line, which extends in the generally vertical direction with respect to the forward direction of the lamp, at the left end edge of the first light distribution pattern as an inverted projection image of the front end edge of the reflective surface of the mirror member. On the other hand, a second light distribution pattern formed with the reflected light from the reflector of the second lamp unit is formed with a vertical cut-off line extends in the generally vertical direction with respect to the forward direction of the lamp, at the right end edge of the second light distribution pattern as an inverted projection image of the front end edge of the reflective surface of the mirror member.

In that situation, because the left end portion of the first light distribution pattern is formed by synthesizing light that is directly incident on the projection lens after being reflected from the reflector of the first lamp unit and light that is incident on the projection lens after being reflected from this reflector and then reflected by the mirror member, distinction of the vertical cut-off line can be sufficiently ensured. In the same manner, because the right end portion of the second light distribution pattern is formed by synthesizing light that is directly incident on the projection lens after being reflected from the reflector of the second lamp unit and light that is incident on the projection lens after being reflected from this reflector and then reflected by the mirror member, distinction of the vertical cut-off line can be sufficiently ensured.

Consequently, by lighting the light-emitting element of the first lamp unit, the first light distribution pattern having the distinct vertical cut-off line at the left end edge is formed in a manner extending toward the right side from the directly forward direction of the lamp. On the other hand, by lighting the light-emitting element of the second lamp unit, the second light distribution pattern having the distinct vertical cut-off line at the right end edge is formed in a manner extending toward the left side from the directly forward direction of the lamp. In addition, by lighting both the light-emitting elements at the same time, a third light distribution pattern that is provided by synthesizing the first and the second light distribution patterns is formed in a manner diffusing toward both the right and left sides from the directly forward direction of the lamp, in a state in which both of the vertical cut-off lines generally coincide with each other.

Moreover, in the vehicular illumination lamp according to the present invention, because the first and the second lamp units are configured to be swiveled in the horizontal direction by the first and the second swivel mechanisms, respectively, any one of the first, the second, and the third light distribution patterns can be selectively displaced in the lateral direction as an additional light distribution pattern for high beam.

In that situation, by displacing the first light distribution pattern in the lateral direction, the vertical cut-off line of the first light distribution pattern can be formed near the right side of an oncoming vehicle or a leading vehicle. On the other hand, by displacing the second light distribution pattern in the lateral direction, the vertical cut-off line of the second light distribution pattern can be formed near the left side of the oncoming vehicle or the leading vehicle. In addition, by combining the first and the second light distribution patterns that are appropriately displaced in the lateral directions, it is possible to radiate light to areas on both the right and left sides of the vehicle without giving glare to the driver of the oncoming vehicle or the leading vehicle, and consequently, visibility of the area ahead of the vehicle can be improved. Moreover, when there is neither the oncoming vehicle nor the leading vehicle, a diffusion light distribution pattern can be formed in an appropriate direction depending on the degree of curvature of the vehicle running path, and so on, by displacing the third light distribution pattern in the lateral direction.

As described above, according to the present invention, in the vehicular illumination lamp configured so as to form the additional light distribution pattern for high beam, visibility of the area ahead of the vehicle can be improved without giving glare to the driver of the oncoming vehicle or the leading vehicle.

With this configuration, if the front end edge of the reflective surface in each of the mirror members is configured to include a lower vertical portion extending generally directly downward from the rear side focal point of each of the projection lens, a horizontal portion extending generally directly rearward from an upper end position of the lower vertical portion, and an upper vertical portion extending generally directly upward from a rear end position of the horizontal portion, and if it is configured such that the mirror member of the first lamp unit is formed with an upward reflective surface extending generally horizontally toward the right side from the horizontal portion on the front end edge of the reflective surface of the mirror member while the mirror member of the second lamp unit is formed with an upward reflective surface extending generally horizontally toward the left side from the horizontal portion on the front end edge of the reflective surface of the mirror member, the following effects can be obtained.

In other words, the upper vertical portion of the front end edge of the reflective surface in each of the mirror members is offset to the rear side of the lower vertical portion of the front end edge. Therefore, on the basis that an upper half portion of the left end edge of the first light distribution pattern is formed as the vertical cut-off line, a lower half portion of the left end edge can be formed in a position offset to the left side of the position of the vertical cut-off line. On the other hand, on the basis that an upper half portion of the right end edge of the second light distribution pattern is formed as the vertical cut-off line, a lower half portion of the right end edge can be formed in a position offset to the right side of the position of the vertical cut-off line. Consequently, even in the case in which the first light distribution pattern and the second light distribution pattern are arranged so that the positions of both the vertical cut-off lines are separated from each other, if the distance between the positions is relatively small, the additional light distribution pattern for high beam can be formed in a state in which an extended portion that extends to the left side of the vertical cut-off line in the first light distribution pattern and an extended portion that extends to the right side of the vertical cut-off line in the second light distribution pattern partially overlap each other.

In that situation, because the mirror member of the first lamp unit is formed with the upward reflective surface extending generally horizontally toward the right side from the horizontal portion on the front end edge of the reflective surface of the mirror member, a horizontal cut-off line extending toward the left side from a lower end position of the vertical cut-off line is formed at an upper end edge of the extended portion of the first light distribution pattern, as an inverted projection image of the front end edge of the upward reflective surface. On the other hand, because the mirror member of the second lamp unit is formed with the upward reflective surface extending generally horizontally toward the left side from the horizontal portion on the front end edge of the reflective surface of the mirror member, a horizontal cut-off line extending toward the right side from a lower end position of the vertical cut-off line is formed at an upper end edge of the extended portion of the second light distribution pattern, as an inverted projection image of the front end edge of the upward reflective surface.

Accordingly, by employing the configuration as described above, it is possible to radiate light to the area around the oncoming vehicle or the leading vehicle on the road in front of the vehicle without giving glare to the driver of the oncoming vehicle or the leading vehicle. Consequently, visibility of the area ahead of the vehicle can be further improved.

### BRIEF DESCRIPTION OF THE DRAWINGS

[FIG. 1]

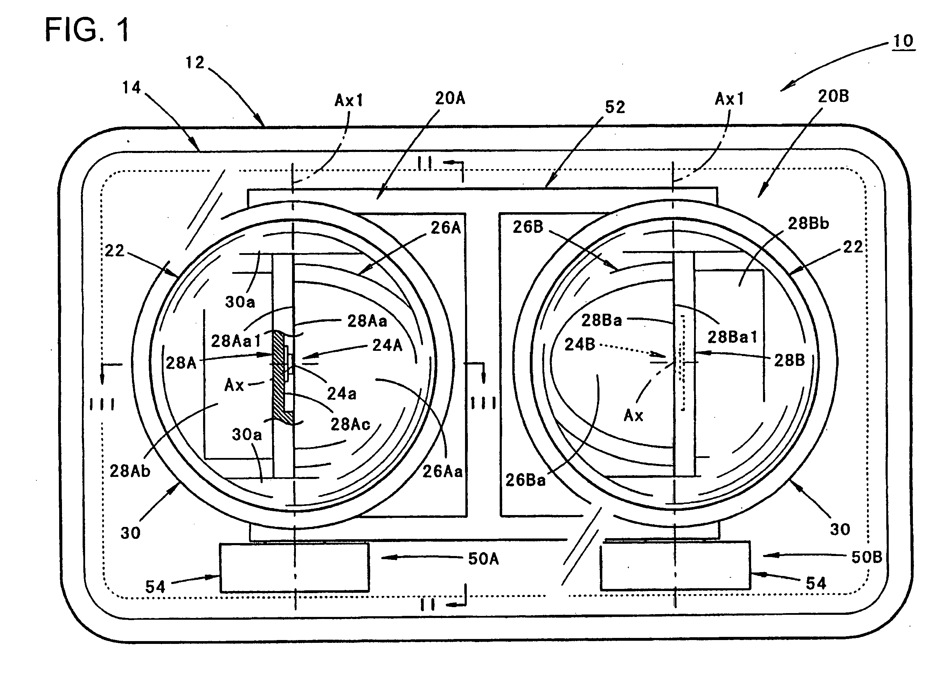

   FIG. 1 is a front view showing a vehicular illumination lamp constructed according to an embodiment of the present invention.
[FIG. 2]

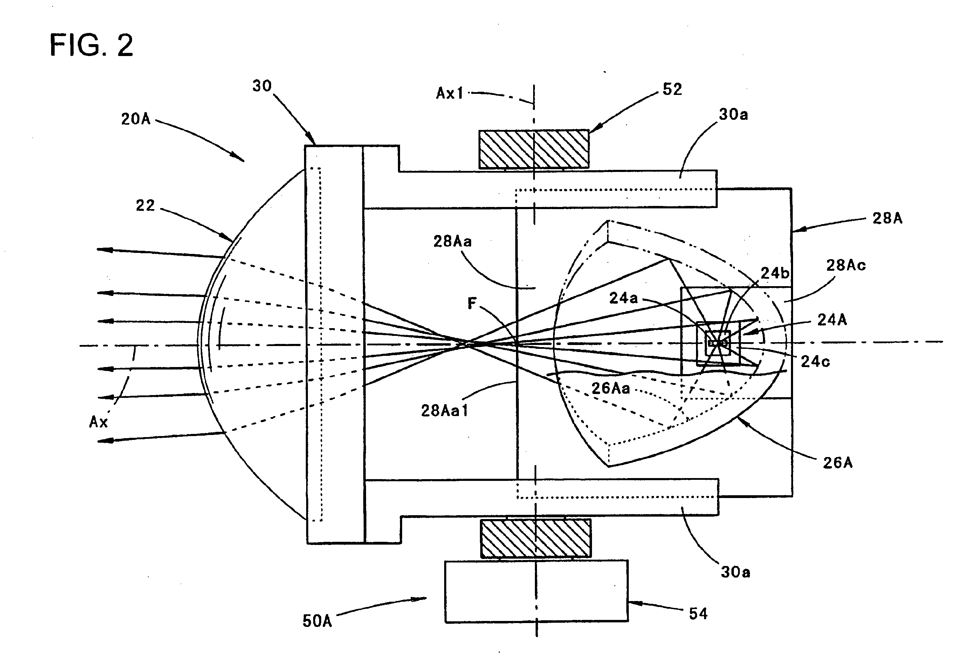

   FIG. 2 is a II-II line cross-sectional view of FIG. 1.
[FIG. 3]

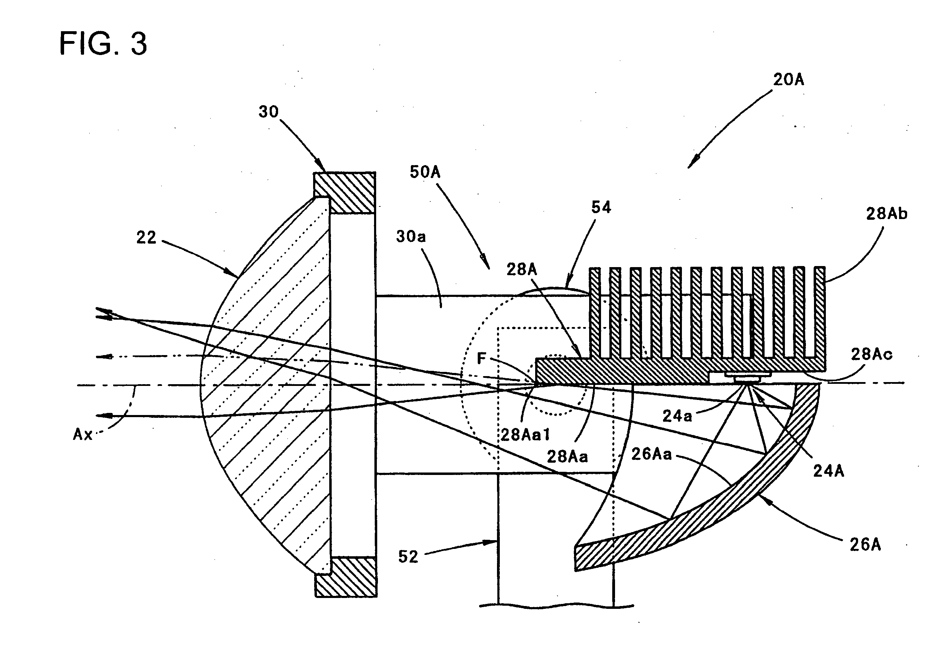

   FIG. 3 is a III-III line cross-sectional view of FIG. 1.
[FIG. 4]

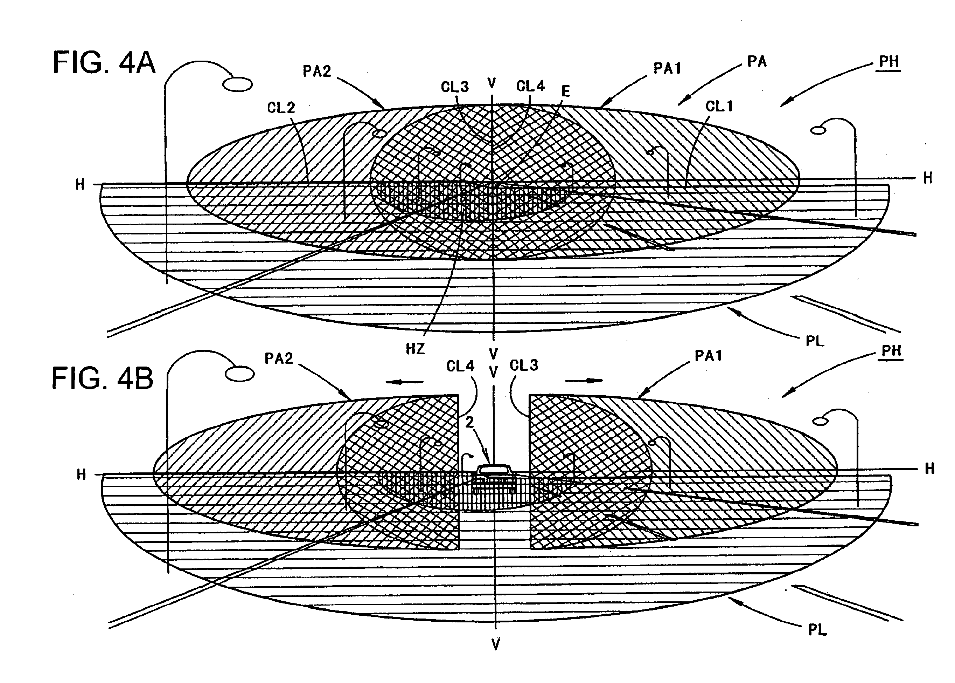

   FIG. 4A is a perspective view showing additional light distribution patterns formed, with light radiated forward from the vehicular illumination lamp, in a duplicate manner on a virtual vertical screen arranged at a position 25 m ahead of a vehicle, together with a low-beam distribution pattern formed with light radiated from another vehicular illumination lamp; and FIG. 4B is a view similar to FIG. 4A, showing additional light distribution patterns different from the additional light distribution patterns.
[FIG. 5]

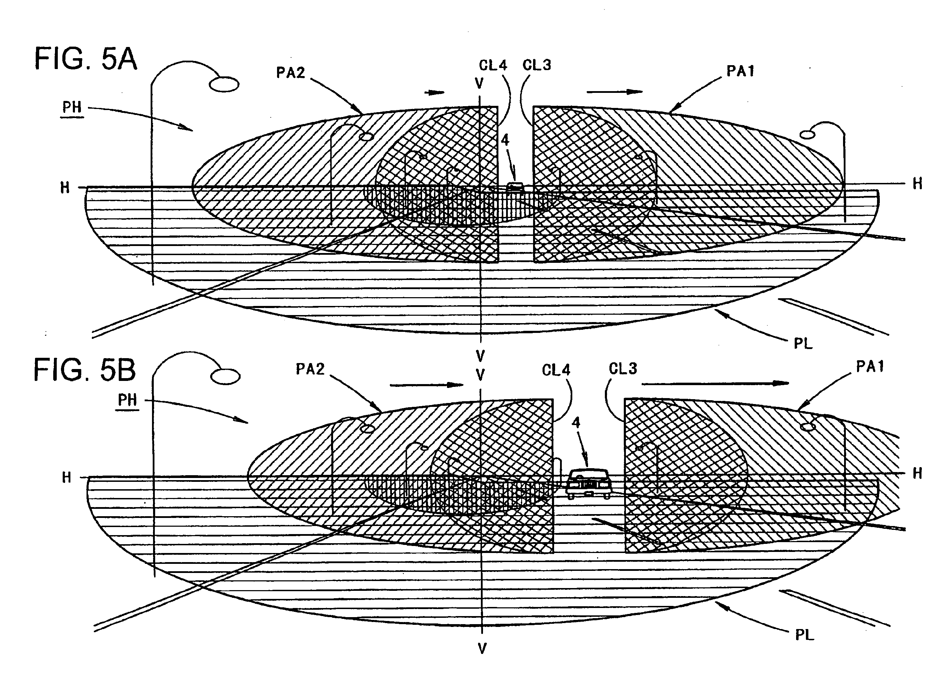

   FIG. 5 shows, similarly to FIG. 4, views illustrating two different kinds of additional light distribution patterns from the additional light distribution patterns.
[FIG. 6]

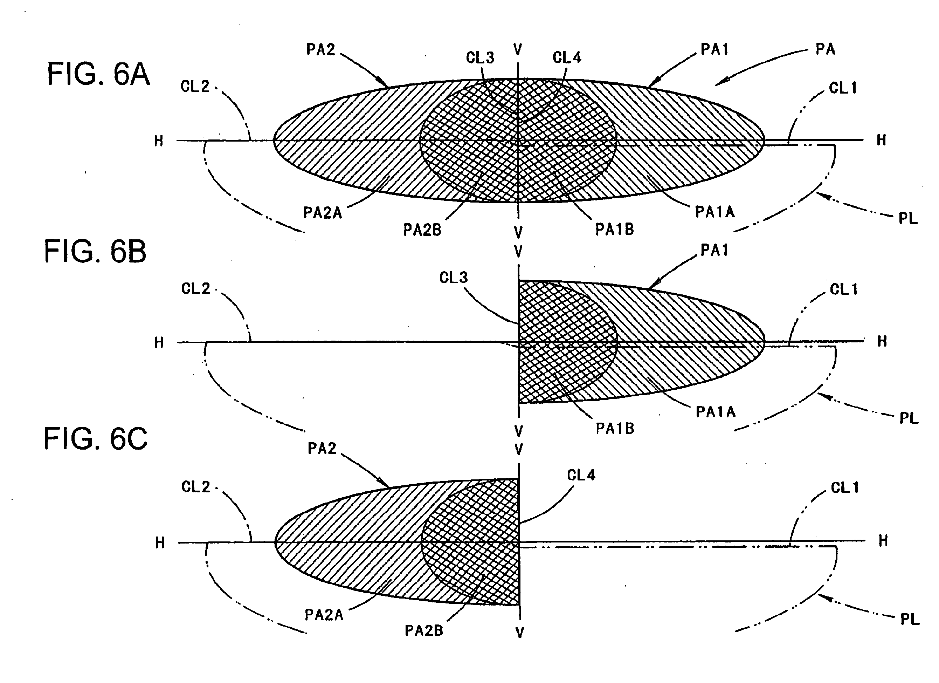

   FIG. 6 shows views, each of which illustrates the additional light distribution pattern formed on the virtual vertical screen with light radiated from one lamp unit in the vehicular illumination lamp.
[FIG. 7]

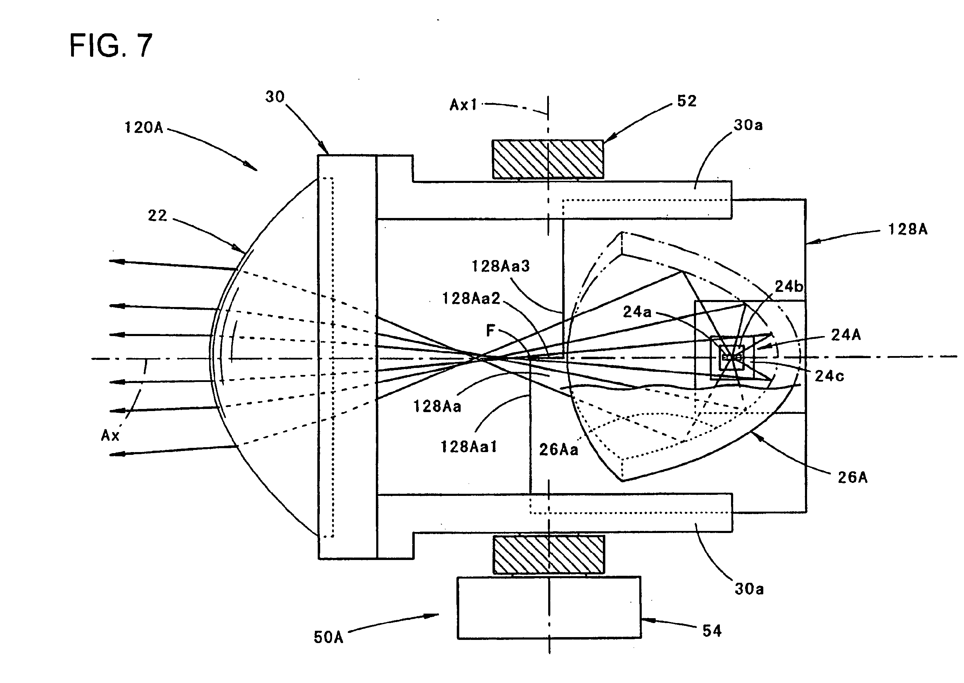

   FIG. 7 is a view similar to FIG. 2, showing a lamp unit of a vehicular illumination lamp according to a modification example of the embodiment.
[FIG. 8]

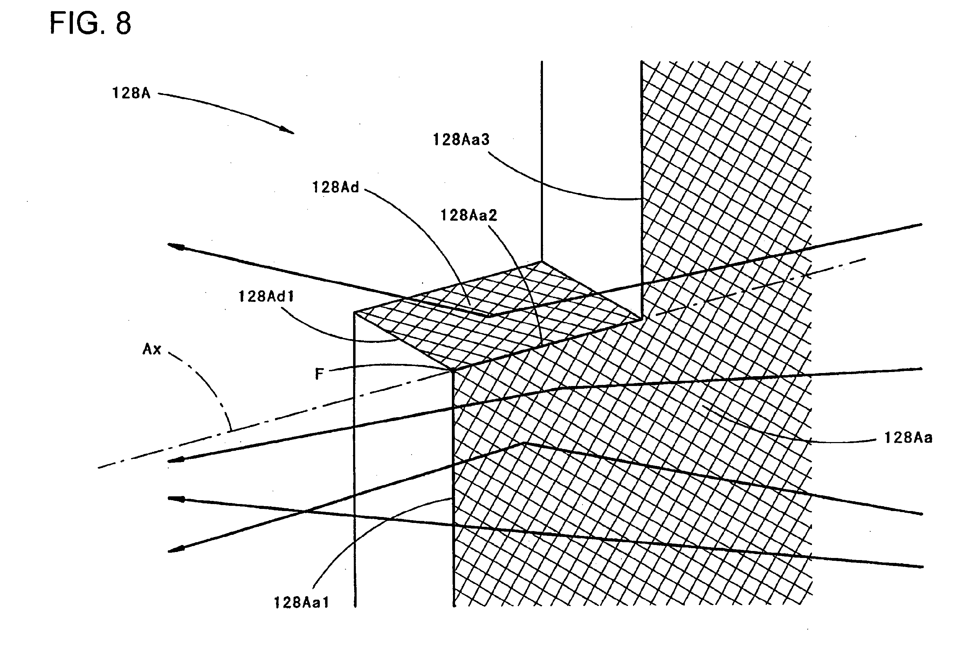

   FIG. 8 is a perspective view showing an essential part of a mirror member of the lamp unit of the modification example.
[FIG. 9]

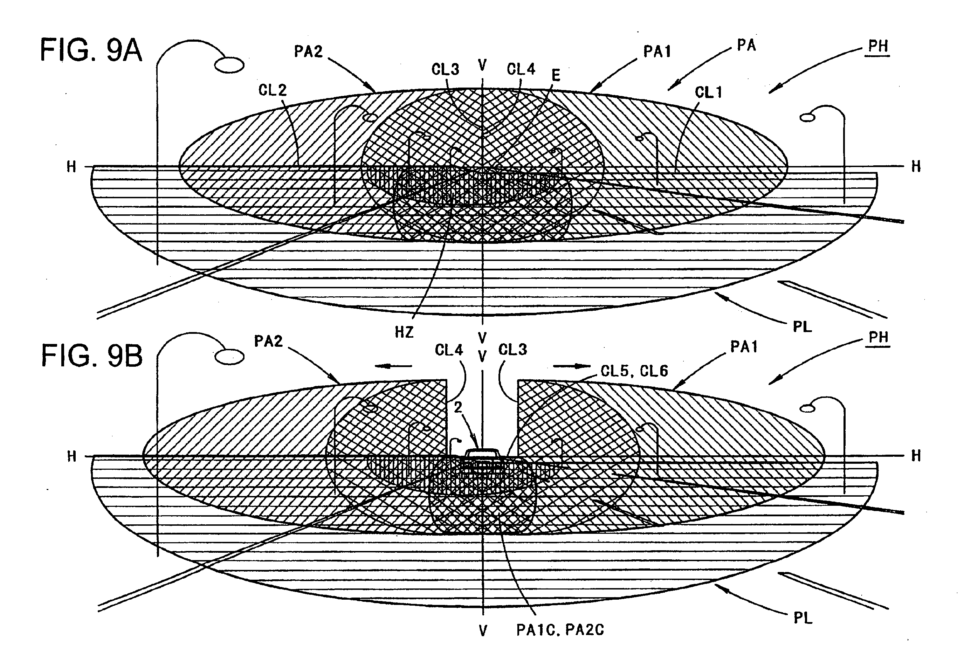

   FIG. 9 shows, similarly to FIG. 4, views illustrating operations of the modification example.
[FIG. 10]

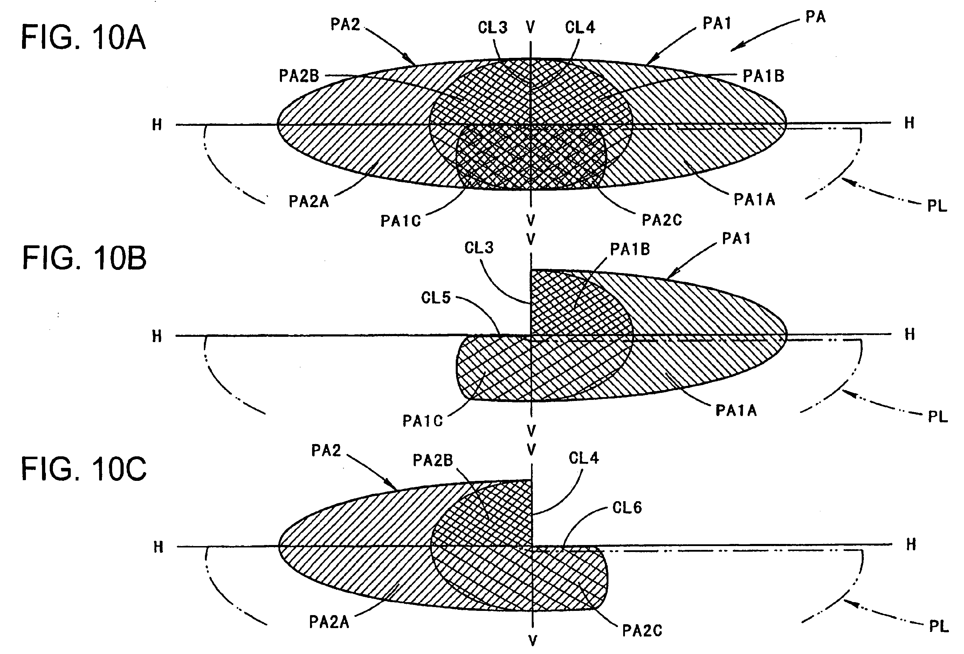

   FIG. 10 shows, similarly to FIG. 6, views illustrating operations of the modification example.

### [Best Mode for Carrying Out the Invention]

Hereafter, an embodiment according to the present invention will be described by using drawings.

FIG. 1 is a front view showing a vehicular illumination lamp 10 constructed according to a preferred embodiment of the present invention.

As shown in the same drawing, the vehicular illumination lamp 10 according to the present embodiment has a configuration in which a lamp chamber formed with a lamp body 12 and with a plain translucent cover 14 mounted at a front end opening of the lamp body 12 houses a pair of right and left lamp units 20A, 20B and a pair of swivel mechanisms 50A, 50B that independently swivel the lamp units 20A, 20B, respectively, in the horizontal direction.

In that situation, regarding the two sets of the lamp units 20A, 20B and the swivel mechanisms 50A, 50B, the lamp unit 20A (first lamp unit) has a configuration laterally symmetrical to that of the lamp unit 20B (second lamp unit), and the swivel mechanism 50A (first swivel mechanism) has the same configuration as that of the swivel mechanism 50B (second swivel mechanism).

In this vehicular illumination lamp 10, under a standard condition in which a light axis adjustment of each of the lamp units 20A, 20B has been completed and swivel driving is not performed by each of the swivel mechanisms 50A, 50B, each optical axis Ax of each of the lamp units 20A, 20B extends to the forward direction of a vehicle.

In addition, in this vehicular illumination lamp 10, light radiated from both the lamp units 20A, 20B forms an additional light distribution pattern PA as shown in FIG. 4A. This additional light distribution pattern PA is a light distribution pattern that is formed in addition to a low-beam distribution pattern PL formed with light radiated from another vehicular illumination lamp (not shown), and as a synthesized light distribution pattern of the aforementioned patterns, a high-beam distribution pattern PH is formed.

Note that the additional light distribution pattern PA is also formed in forms other than the form shown in FIG. 4A. However, description will be made later in this respect.

Hereafter, configurations of the one lamp unit 20A and the one swivel mechanism 50A will be described.

FIG. 2 is a II-II line cross-sectional view of FIG. 1, and FIG. 3 is a III-III line cross-sectional view of FIG. 1.

As shown in these drawings, the lamp unit 20A is provided with a projection lens 22 arranged on the optical axis Ax, a light-emitting element 24A arranged facing toward the left side in the vicinity of the optical axis Ax on the rear side of a rear side focal point F of the projection lens 22, a reflector 26A that is arranged so as to cover the light-emitting element 24A from the left side and that reflects light from the light-emitting element 24A in the direction closer to the optical axis Ax toward the front, and a mirror member 28A that is arranged between the reflector 26A and the projection lens 22.

The projection lens 22 is composed of a planoconvex aspheric lens having a forward side surface as a convex surface and a rearward side surface as a flat surface, and projects a light source image formed on a rear focal plane of the lens on a virtual vertical screen in front of the lamp as an inverted image.

The projection lens 22 is fixedly supported by a lens holder 30 of a ring shape. The lens holder 30 is formed with a pair of brackets 30a extending rearward from rear surfaces of both upper and lower ends of the lens holder 30.

The light-emitting element 24A is a white light-emitting diode, and composed of a light-emitting chip 24a constituting a horizontally oblong shaped light-emitting surface, a substrate 24b supporting the light-emitting chip 24a, and a metallic supporting plate 24c supporting the substrate 24b. In that situation, the light-emitting chip 24a is formed by horizontally arranging four light-emitting chips, each of which has a square light-emitting surface of approximately 1 mm on a side, so as to be generally in close contact with each other. In addition, the light-emitting chip 24a is sealed with a thin film that is formed so as to cover the light-emitting surface of the chip.

A reflective surface 26Aa of the reflector 26A is formed of a curved surface of a generally ellipsoidal shape having a long axis extending generally in parallel with the optical axis Ax and also having a first focal point at the center of light emission of the light-emitting element 24A, and is set to gradually decrease in eccentricity from the horizontal cross-sectional plane toward the vertical cross-sectional plane. As a result, the reflector 26A makes the light from the light-emitting element 24A substantially converge slightly in front of the rear side focal point F in the vertical cross-sectional plane, and moves the converging point forward by a large amount in the horizontal cross-sectional plane.

The mirror member 28A is a plate member made of metal that is arranged so that a left side surface thereof extends along a vertical plane including the optical axis Ax. The left side surface of the mirror member 28A is treated with mirror processing so as to form a reflective surface 28Aa that reflects part of reflected light from the reflector 26A toward the left side. A front end edge 28Aa1 of the reflective surface 28Aa of the mirror member 28A extends in the vertical direction so as to pass through the rear side focal point F. In addition, a heat sink 28Ab is formed on the right side surface of the mirror member 28A. The heat sink 28Ab is provided with a plurality of radiation fins extending along a vertical plane orthogonal to the optical axis Ax.

The light-emitting element 24A is fixedly supported at the supporting plate 24c thereof in a depressed portion 28Ac that is formed so as to be a lower step in the rear of the left side surface of the mirror member 28A. In addition, the reflector 26A is fixedly supported by the left side surface of the mirror member 28A. Moreover, the mirror member 28A is fixedly supported at both upper and lower ends thereof by the pair of upper and lower brackets 30a of the lens holder 30.

The swivel mechanism 50A is composed of a frame member 52 that supports the lamp unit 20A on the pair of upper and lower brackets 30a of the lens holder 30 so as to be rotatable around an axis line Ax1 extending in the vertical direction, and an actuator 54 that is fixed to the frame member 52 on the lower side of the frame member 52 and that rotates the lamp unit 20A around the axis line Ax1.

As shown in FIG. 1, the frame member 52 of the swivel mechanism 50A is also used as the frame member 52 of the other swivel mechanism 50B. In other words, the other lamp unit 20B is also supported by the frame member 52 on the pair of upper and lower brackets 30a of the lens holder 30 so as to be rotatable around an axis line Ax1 extending in the vertical direction.

The frame member 52 is supported so as to be tiltable relative to the lamp body 12. Consequently, the light axis adjustment of both the lamp units 20A, 20B can be performed in one adjustment operation.

FIG. 4A is a perspective view showing the additional light distribution pattern PA formed, with the light radiated forward from the vehicular illumination lamp 10 according to the present embodiment, on the virtual vertical screen arranged at a position 25 m ahead of the vehicle, together with the low-beam distribution pattern PL formed with the light radiated from another vehicular illumination lamp.

As described above, the high-beam distribution pattern PH is formed by adding the additional light distribution pattern PA to the low-beam distribution pattern PL.

Before describing the additional light distribution pattern PA, the low-beam distribution pattern PL will be described.

As shown in A of the same drawing, the low-beam distribution pattern PL is a low-beam distribution pattern for left side light distribution, and has horizontal cut-off lines CL1, CL2 at the upper end edge thereof in a stepped fashion to the right and the left.

The horizontal cut-off lines CL1, CL2 extend horizontally in a stepped fashion to the right and the left of a line V-V that is a vertical line passing through a vanishing point H-V in the forward direction of the lamp. On the right side of the line V-V, the cut-off line is formed as the horizontal cut-off line CL1 on the opposing-lane side that extends horizontally, and on the left side of the line V-V, the cut-off line is formed as the horizontal cut-off line CL2 on the self-lane side that extends horizontally in a fashion stepped upward from the horizontal cut-off line CL1. Note that the end portion of the horizontal cut-off line CL2 on the side near to the line V-V is formed as an oblique cut-off line that extends diagonally upward left at an inclination angle of 15° from an intersection point between the horizontal cut-off line CL1 and the line V-V.

In the low-beam distribution pattern PL, an elbow point E that is the intersection point between the horizontal cut-off line CL1 and the line V-V is located downward by approximately 0.5° to 0.6° from the point H-V, and a hot zone HZ serving as an area of high-intensity light is formed so as to surround the elbow point E slightly close to the left.

The additional light distribution pattern PA is formed as a synthesized light distribution pattern of an additional light distribution pattern PA1 that is formed with light radiated from the lamp unit 20A and an additional light distribution pattern PA2 that is formed with light radiated from the lamp unit 20B.

Note that the additional light distribution pattern PA shown in A of the same drawing is a light distribution pattern that is formed when both the lamp units 20A, 20B are under the standard condition (that is, the condition in which the swivel driving is not performed by each of the swivel mechanisms 50A, 50B) and also when the light-emitting elements 24A, 24B of both the lamp units 20A, 20B are lit at the same time.

FIG. 6 shows views illustrating the additional light distribution patterns formed on the virtual vertical screen with the light radiated from both the lamp units 20A, 20B.

In that situation, the additional light distribution pattern PA shown in A of the same drawing is a light distribution pattern that is formed when the light-emitting elements 24A, 24B of the lamp units 20A, 20B that are both under the standard condition are lit at the same time. In addition, the additional light distribution pattern PA1 shown in B of the same drawing is a light distribution pattern that is formed when only the light-emitting element 24A of the lamp unit 20A is lit, and the additional light distribution pattern PA2 shown in C of the same drawing is a light distribution pattern that is formed when only the light-emitting element 24B of the lamp unit 20B is lit.

As shown in A of the same drawing, the additional light distribution pattern PA is formed in a manner vertically crossing over the horizontal cut-off lines CL1, CL2 of the low-beam distribution pattern PL. In that situation, the additional light distribution pattern PA is formed as a horizontally long light distribution pattern extending in both the right and the left directions from the point H-V serving as a center.

As shown in B of the same drawing, the additional light distribution pattern PA1 is formed as a horizontally long light distribution pattern spreading toward the right side from the line V-V. In that situation, the additional light distribution pattern PA1 is formed as a vertically symmetrical light distribution pattern with respect to a line H-H that is a horizontal line passing through the point H-V.

The additional light distribution pattern PA1 is formed as a synthesized light distribution pattern of a light distribution pattern PA1A and a light distribution pattern PA1B, and formed at the left end edge thereof with a distinct vertical cut-off line CL3 extending in the vertical direction along the line V-V.

The light distribution pattern PA1A of the additional light distribution pattern PA1 is a light distribution pattern formed with light from the light-emitting element 24A that is directly incident on the projection lens 22 of the lamp unit 20A after being reflected by the reflector 26A of the lamp unit 20A. Further, the light distribution pattern PA1B is a light distribution pattern formed with light from the light-emitting element 24A that is incident on the projection lens 22 of the lamp unit 20A after being reflected by the reflector 26A of the lamp unit 20A and then by the reflective surface 28Aa of the mirror member 28A. The light distribution pattern PA1B is formed so as to overlap with the light distribution pattern PA1A in the left end portion of the light distribution pattern PA1A.

The vertical cut-off line CL3 in the additional light distribution pattern PA1 is formed as an inverted projection image of the front end edge 28Aa1 of the reflective surface 28Aa of the mirror member 28A. In that situation, the vertical cut-off line CL3 is formed to be highly distinct because the vertical cut-off line CL3 is formed in the same position by each of the light distribution patterns PA1A, PA1B.

As shown in C of the same drawing, the additional light distribution pattern PA2 is formed to be a light distribution pattern laterally symmetrical to the additional light distribution pattern PA1 with respect to the line V-V. In other words, the additional light distribution pattern PA2 is formed as a horizontally long light distribution pattern spreading toward the right side from the line V-V. In that situation, the additional light distribution pattern PA2 is formed as a synthesized light distribution pattern of a light distribution pattern PA2A that is formed with light that is reflected from a reflector 26B of the lamp unit 20B and directly incident on the projection lens 22, and a light distribution pattern PA2B that is formed with light that is reflected from the reflector 26B and then directly incident on the projection lens 22 after being reflected by a reflective surface 28Ba of a mirror member 28B. The right end edge of the additional light distribution pattern PA2 is formed with a distinct vertical cut-off line CL4 extending in the vertical direction along the line V-V as an inverted projection image of a front end edge 28Ba1 of the reflective surface 28Ba of the mirror member 28B.

Consequently, as shown in A of the same drawing, the additional light distribution pattern PA synthesized from the additional light distribution patterns PA1, PA2 is formed in a manner spreading toward both the right and left sides from the directly forward direction of the lamp, in a state in which both of the vertical cut-off lines CL3, CL4 coincide with each other on the line V-V. In that situation, the position of the vertical cut-off line CL3 and the position of the vertical cut-off line CL4 exactly coincide with each other on the line V-V, because both the front end edge 28Aa1 of the reflective surface 28Aa on the mirror member 28A of the lamp unit 20A and the front end edge 28Ba1 of the reflective surface 28Ba on the mirror member 28B of the lamp unit 20B extend in the vertical direction so as to pass through the rear side focal point F.

Next, operations and effects of the present embodiment will be described.

The vehicular illumination lamp 10 according to the present embodiment is provided with the pair of projector-type lamp units 20A, 20B. Of these lamp units, the lamp unit 20A is configured such that the mirror member 28A thereof that is arranged between the reflector 26A and the projection lens 22 reflects part of reflected light from the reflector 26A toward the left side, and on the other hand, the lamp unit 20B is configured such that the mirror member 28B thereof that is arranged between the reflector 26B and the projection lens 22 reflects part of reflected light from the reflector 26B toward the right side. In addition, the reflective surfaces 28Aa, 28Ba of the mirror members 28A, 28B in the lamp units 20A, 20B are formed so as to extend along the vertical planes including the optical axes Ax and formed so that the front end edges 28Aa1, 28Ba1 of the reflective surfaces 28Aa, 28Ba pass through the rear side focal points F of the projection lenses 22. Therefore, the following effects can be obtained.

In other words, the additional light distribution pattern PA1 (first light distribution pattern) formed with the reflected light from the reflector 26A of the lamp unit 20A is formed with the vertical cut-off line CL3, which extends in the generally vertical direction with respect to the forward direction of the lamp, at the left end edge of the additional light distribution pattern PA1 as the inverted projection image of the front end edge 28Aa1 of the reflective surface 28Aa of the mirror member 28A. On the other hand, the additional light distribution pattern PA2 (second light distribution pattern) formed with the reflected light from the reflector 26B of the lamp unit 20B is formed with the vertical cut-off line CL4, which extends in the generally vertical direction with respect to the forward direction of the lamp, at the right end edge of the additional light distribution pattern PA2 as the inverted projection image of the front end edge 28Ba1 of the reflective surface 28Ba of the mirror member 28B.

In that situation, because the left end portion of the additional light distribution pattern PA1 is formed by synthesizing the light that is directly incident on the projection lens 22 after being reflected from the reflector 26A of the lamp unit 20A and the light that is incident on the projection lens 22 after being reflected from the reflector 26A and then reflected by the mirror member 28A, distinction of the vertical cut-off line CL3 can be sufficiently ensured. In the same manner, because the right end portion of the additional light distribution pattern PA2 is formed by synthesizing the light that is directly incident on the projection lens 22 after being reflected from the reflector 26B of the lamp unit 20B and the light that is incident on the projection lens 22 after being reflected from the reflector 26B and then reflected by the mirror member 28B, distinction of the vertical cut-off line CL4 can be sufficiently ensured.

Consequently, by lighting the light-emitting element 24A of the lamp unit 20A, the additional light distribution pattern PA1 having the distinct vertical cut-off line CL3 at the left end edge is formed in a manner extending toward the right side from the directly forward direction of the lamp. On the other hand, by lighting the light-emitting element 24B of the lamp unit 20B, the additional light distribution pattern PA2 having the distinct vertical cut-off line CL4 at the right end edge is formed in a manner extending toward the left side from the directly forward direction of the lamp. In addition, by lighting both the light-emitting elements 24A, 24B at the same time, the additional light distribution pattern PA (third light distribution pattern) that is provided by synthesizing the two additional light distribution patterns PA1, PA2 is formed in a manner diffusing toward both the right and left sides from the directly forward direction of the lamp in the state in which both of the vertical cut-off lines CL3, CL4 coincide with each other.

Moreover, in the vehicular illumination lamp 10 according to the present embodiment, because both of the lamp units 20A, 20B are configured to swivel in the horizontal direction by the swivel mechanisms 50A, 50B, respectively, any one of the additional light distribution patterns PA1, PA2, and PA can be selectively displaced in the lateral direction.

In that situation, by displacing the additional light distribution pattern PA1 in the lateral direction, the vertical cut-off line CL3 of the additional light distribution pattern PA1 can be formed near the right side of an oncoming vehicle or a leading vehicle. On the other hand, by displacing the additional light distribution pattern PA2 in the lateral direction, the vertical cut-off line CL4 of the additional light distribution pattern PA2 can be formed near the left side of the oncoming vehicle or the leading vehicle. In addition, by combining the two light distribution patterns PA1, PA2 that are appropriately displaced in the lateral direction, it is possible to radiate light to areas on both the right and left sides of the vehicle without giving glare to the driver of the oncoming vehicle or the leading vehicle, and consequently, visibility of the area ahead of the vehicle can be improved. Moreover, when there is neither the oncoming vehicle nor the leading vehicle, a diffusion light distribution pattern can be formed in an appropriate direction depending on the degree of curvature of the vehicle running path, and so on, by displacing the additional light distribution pattern PA in the lateral direction.

As described above, according to the present embodiment, in the vehicular illumination lamp 10 configured so as to form the additional light distribution pattern for high beam, visibility of the area ahead of the vehicle can be improved without giving glare to the driver of the oncoming vehicle or the leading vehicle.

In that situation, because the vehicular illumination lamp 10 according to the present embodiment is provided with the two sets of the lamp units 20A, 20B and the swivel mechanisms 50A, 50B, it is made possible by appropriately combining the directions of both the lamp units 20A, 20B to radiate light to areas on both the right and left sides of the vehicle without giving glare to the driver of the oncoming vehicle or the leading vehicle. Consequently, visibility of the area ahead of the vehicle can be further improved.

Specifically, as shown in FIG. 4B, in the case in which there is a leading vehicle 2 running in the self-lane on the road in front of the vehicle, the additional light distribution pattern PA1 is formed in a position displaced to the right from the position shown in FIG. 4A by swiveling the one lamp unit 20A from the standard condition to the right to a predetermined angle by using the swivel mechanism 50A. On the other hand, the additional light distribution pattern PA2 is formed in a position displaced to the left from the position shown in FIG. 4A by swiveling the other lamp unit 20B from the standard condition to the left to the predetermined angle by using the swivel mechanism 50B. Thus, the pair of additional light distribution patterns PA1, PA2 can be formed in a state in which the vertical cut-off lines CL3, CL4 thereof are located close to both the right and left sides, respectively, of the leading vehicle 2. Then, as a result, it is possible to radiate light to areas on both the right and left sides of the leading vehicle 2 without giving glare to the driver of the leading vehicle.

In addition, as shown in FIG. 5A, in the case in which there is an oncoming vehicle 4 running in the opposing-lane on the road in front of the vehicle, the additional light distribution pattern PA1 is formed in a position displaced by a relatively large amount to the right from the position shown in FIG. 4A by swiveling the one lamp unit 20A by a relatively large angle from the standard condition to the right by using the swivel mechanism 50A. On the other hand, the additional light distribution pattern PA2 is formed in a position displaced by a relatively small amount to the right from the position shown in FIG. 4A by swiveling the other lamp unit 20B by a relatively small angle from the standard condition to the right by using the swivel mechanism 50B. Thus, the pair of additional light distribution patterns PA1, PA2 can be formed in a state in which the vertical cut-off lines CL3, CL4 thereof are located close to both the right and left sides, respectively, of the oncoming vehicle 4. Then, as a result, it is made possible to radiate light to areas on both the right and left sides of the oncoming vehicle 4 without giving glare to the driver of the oncoming vehicle.

In that situation, as shown in FIG. 5B, when the oncoming vehicle 4 comes close, the pair of additional light distribution patterns PA1, PA2 can be formed in a state in which the vertical cut-off lines CL3, CL4 thereof are located close to both the right and left sides, respectively, of the oncoming vehicle 4, by increasing the rightward swivel angles of both the lamp units 20A, 20B by angles different from each other depending on the position of the oncoming vehicle 4.

Note that the position of the leading vehicle 2 or the oncoming vehicle 4 on the virtual vertical screen can be detected in a simple manner, for example, by taking an image of a scene ahead of the vehicle using a CCD camera or the like, and by detecting the positions of tail lamps of the leading vehicle 2 in a lit state or the positions of headlamps of the oncoming vehicle 4 in a lit state as high concentration pixels, based on the captured image data.

Next, a modification example of the embodiment will be described.

FIG. 7 is a view similar to FIG. 2, showing a lamp unit 120A of a vehicular illumination lamp according to the modification example.

As shown in the same drawing, although the basic configuration of the lamp unit 120A according to the modification example is the same as that of the lamp unit 20A of the above embodiment, the configuration of a mirror member 128A of the lamp unit 120A is different from that of the mirror member 28A of the above embodiment.

In other words, a front end edge of a reflective surface 128Aa of the mirror member 128A is composed of a lower vertical portion 128Aa1 extending directly downward from the rear side focal point F of the projection lens 22, a horizontal portion 128Aa2 extending directly rearward from an upper end position of the lower vertical portion 128Aa1, and an upper vertical portion 128Aa3 extending directly upward from a rear end position of the horizontal portion 128Aa2.

FIG. 8 is a perspective view showing an essential part of the mirror member 128A.

As shown in the same drawing, the mirror member 128A is formed with an upward reflective surface 128Ad that extends horizontally toward the right side from the horizontal portion 128Aa2 on the front end edge of the reflective surface 128Aa of the mirror member 128A. The upward reflective surface 128Ad is formed with a width equal to the thickness of the mirror member 128A.

The vehicular illumination lamp according to the modification example is also provided with a lamp unit (not shown) that has a configuration laterally symmetrical to that of the lamp unit 120A.

FIG. 9 and FIG. 10 show, similarly to FIG. 4 and FIG. 6, respectively, views illustrating operations of the modification example.

As shown in FIG. 10B, with respect to the left end edge of the additional light distribution pattern PA1 that is formed with light radiated from the lamp unit 120A, an upper half portion of the left end edge is formed as the vertical cut-off line CL3, and a lower half portion thereof is formed in a position offset to the left side of the position of the vertical cut-off line CL3.

This is due to the shape of the front end edge of the reflective surface 128Aa on the mirror member 128A of the lamp unit 120A. In other words, because the lower vertical portion 128Aa1 of the front end edge extends directly downward from the rear side focal point F of the projection lens 22, the upper half portion of the left end edge of the additional light distribution pattern PA1 is formed as the distinct vertical cut-off line CL3 in the same way as in the above embodiment. However, because the upper vertical portion 128Aa3 of the front end edge extends directly upward from a position separated rearward from the rear side focal point F of the projection lens 22, an extended portion PA1C that extends to the left side of the vertical cut-off line CL3 in the additional light distribution pattern PA1 is formed, and an outline of the left end edge of the extended portion is somewhat indistinct.

In addition, an upper end edge of the extended portion PA1C in the additional light distribution pattern PA1 is formed as a horizontal cut-off line CL5 that extends toward the left side from a lower end position of the vertical cut-off line CL3. This cut-off line is formed as an inverted projection image of a front end edge 128Ad1 of the upward reflective surface 128Ad that is formed so as to extend horizontally toward the right side from the horizontal portion 128Aa2 on the front end edge of the reflective surface 128Aa on the mirror member 128A of the lamp unit 120A.

Note that, in the additional light distribution pattern PA1, although the light distribution pattern PA1A formed with light from the light-emitting element 24A that is directly incident on the projection lens 22 of the lamp unit 120A after being reflected by the reflector 26A of the lamp unit 120A is the same as that of the above embodiment, the light distribution pattern PA1B formed with light from the light-emitting element 24A that is incident on the projection lens 22 of the lamp unit 120A after being reflected by the reflector 26A of the lamp unit 120A and then by the reflective surface 128Aa of the mirror member 128A has a slightly darker lower half portion in brightness. This is because the amount of light reflected by the reflective surface 128Aa is reduced corresponding to the rearward offset of the upper vertical portion 128Aa3 on the front end edge of the reflective surface 128Aa.

As shown in C of the same drawing, the additional light distribution pattern PA2 that is formed with light radiated from the other lamp unit (not shown) is formed to be a light distribution pattern laterally symmetrical to the additional light distribution pattern PA1 with respect to the line V-V.

In other words, an upper half portion of the right end edge of the additional light distribution pattern PA2 is formed as the vertical cut-off line CL4, and a lower half portion thereof is formed as a somewhat indistinct outline in a position offset to the right side of the position of the vertical cut-off line CL4. Then, an extended portion PA2C that extends to the right side of the vertical cut-off line CL4 in the additional light distribution pattern PA2 has a somewhat indistinct outline at the right end edge thereof, and an upper end edge of the extended portion PA2C is formed as a horizontal cut-off line CL6 that extends toward the right side from a lower end position of the vertical cut-off line CL4.

Then, as shown in A of the same drawing, the additional light distribution pattern PA synthesized from the additional light distribution patterns PA1, PA2 is formed in a manner spreading toward both the right and left sides from the directly forward direction of the lamp, in a state in which both of the vertical cut-off lines CL3, CL4 coincide with each other on the line V-V in the upper half portion and the extended portions PA1C, PA2C overlap each other in the lower half portion.

As shown in FIG. 9A, by employing the lamp unit 120A according to the modification example, the additional light distribution pattern PA that is generally the same as that of the embodiment can be formed under the standard condition.

In addition, as shown in B of the same drawing, by displacing the additional light distribution pattern PA1 to the right and also by displacing the additional light distribution pattern PA2 to the left, the pair of additional light distribution patterns PA1, PA2 can be formed in a state in which the vertical cut-off lines CL3, CL4 thereof are located close to both the right and left sides, respectively, of the leading vehicle 2. Then, as a result, it is made possible to radiate light to areas on both the right and left sides of the leading vehicle 2 without giving glare to the driver of the leading vehicle.

In that situation, although both of the additional light distribution patterns PA1, PA2 are formed in the state in which the vertical cut-off lines CL3, CL4 thereof are separated from each other, if the distance between the vertical cut-off lines CL3, CL4 is relatively small, the extended portion PA1C that extends to the left side of the vertical cut-off line CL3 in the additional light distribution pattern PA1 and the extended portion PA2C that extends to the right side of the vertical cut-off line CL4 in the additional light distribution pattern PA2 can partially overlap each other.

In that situation, because the upper end edges of the extended portions PA 1C, PA2C of the additional light distribution patterns PA1, PA2 are formed with the horizontal cut-off lines CL5, CL6, respectively, the area around the leading vehicle 2 can be illuminated more brightly without giving glare to the driver of the leading vehicle. Consequently, visibility of a distant area can be further improved.

Also in the case of the presence of the oncoming vehicle, the same effects as those in the case of the presence of the leading vehicle can be obtained by performing the same control as that in the above embodiment.

In the above embodiment, description has been made on the assumption that each of the light-emitting elements 24A, 24B has the light-emitting chip 24a provided with the horizontally arranged four light-emitting chips, each of which has the square light-emitting surface of approximately 1 mm on a side, so as to be generally in close contact with each other. However, it is obviously possible to configure the light-emitting elements 24A, 24B so as to have light-emitting chips having other shapes or sizes. By using such a configuration, it is possible to adjust shapes or brightness of the additional light distribution patterns PA, PA1, PA2 in an appropriate manner.

Note that the numerical values represented as dimensions in the above embodiment and the modification example thereof are merely examples, and may obviously be set to different values as appropriate.

### [Description of the Reference Numerals]

- 2: LEADING VEHICLE
- 4: ONCOMING VEHICLE
- 10: VEHICULAR ILLUMINATION LAMP
- 12: LAMP BODY
- 14: TRANSLUCENT COVER
- 20A, 120A: LAMP UNIT (FIRST LAMP UNIT)
- 20B: LAMP UNIT (SECOND LAMP UNIT)
- 22: PROJECTION LENS
- 24A, 24B: LIGHT-EMITTING ELEMENT
- 24a: LIGHT-EMITTING CHIP
- 24b: SUBSTRATE
- 24c: SUPPORTING PLATE
- 26A, 26B: REFLECTOR
- 26Aa, 26Ba: REFLECTIVE SURFACE
- 28A, 28B, 128A: MIRROR MEMBER
- 28Aa, 28Ba, 128Aa: REFLECTIVE SURFACE
- 28Aa1, 28Ba1, 128Ad1: FRONT END EDGE
- 28Ab: HEAT SINK
- 28Ac: DEPRESSED PORTION
- 30: LENS HOLDER
- 30a: BRACKET
- 50A: SWIVEL MECHANISM (FIRST SWIVEL MECHANISM)
- 50B: SWIVEL MECHANISM (SECOND SWIVEL MECHANISM)
- 52: FRAME MEMBER
- 54: ACTUATOR
- 128Aa1: LOWER VERTICAL PORTION
- 128Aa2: HORIZONTAL PORTION
- 128Aa3: UPPER VERTICAL PORTION
- 128Ad: UPWARD REFLECTIVE SURFACE
- Ax: OPTICAL AXIS
- Ax1: AXIS LINE
- CL1, CL2, CL5, CL6: HORIZONTAL CUT-OFF LINE
- CL3, CL4: VERTICAL CUT-OFF LINE
- E: ELBOW POINT
- F: REAR SIDE FOCAL POINT
- HZ: HOT ZONE
- PA, PA1, PA2: ADDITIONAL LIGHT DISTRIBUTION PATTERN
- PA1A, PA1B, PA2A, PA2B: LIGHT DISTRIBUTION PATTERN
- PA1C, PA2C: EXTENDED PORTION
- PH: HIGH-BEAM DISTRIBUTION PATTERN
- PL: LOW-BEAM DISTRIBUTION PATTERN

## Claims

1. A vehicular illumination lamp (10) configured so as to form an additional light distribution pattern in addition to a low-beam distribution pattern when a high-beam distribution pattern is formed, and comprising:
a first lamp (20A) unit including:
a projection lens (22) arranged on an optical axis (Ax) extending in a vehicular longitudinal direction;
a light-emitting element (24A) arranged in the vicinity of the optical axis (Ax) on a rear side of a rear side focal point (F) of the projection lens (22);
a reflector (26A) that is arranged so as to cover the light-emitting element (24A) and that reflects light from the light-emitting element (24A) in a direction closer to the optical axis (Ax) toward the front; and
a mirror member (28A) that is arranged between the reflector (26A) and the projection lens (22) and that reflects part of reflected light from the reflector (26A), the mirror member (28A) having a reflective surface (26Aa) and a front end edge (28Aa1) of the reflective surface (26Aa) passes through the rear side focal point (F) of the projection lens;
a second lamp unit (20B) including:
a projection lens (22) arranged on an optical axis (Ax) extending in the vehicular longitudinal direction;
a light-emitting element (24B) arranged in the vicinity of the optical axis (Ax) on a rear side of a rear side focal point (F) of the projection lens (22);
a reflector (26B) that is arranged so as to cover the light-emitting element (24B) and that reflects light from the light-emitting element (24B) in a direction closer to the optical axis (Ax) toward the front; and
a mirror member (28B) that is arranged between the reflector (26B) and the projection lens (22) and that reflects part of reflected light from the reflector (26B), the mirror member (28B) having a reflective surface (26Ba) and a front end edge (28Ba1) of the reflective surface (26Ba) passes through the rear side focal point (F) of the projection lens (22); and **characterized in that**
the light-emitting element (24A, 24B) of the first (20A) and the second lamp unit (20B), respectively, faces towards a left and a right side, respectively,
the reflector (26A, 26B) of the first (20A) and the second lamp unit (20B), respectively, covers the light-emitting element (24A, 24B) from the left and the right side, respectively,
the mirror member (28A) of the first lamp unit (20A) being formed so that its reflective surface (26Aa) extends generally along a vertical plane including the optical axis (Ax),
and the mirror member (28B) of the second lamp unit (20B) being formed so that its reflective surface (26 Ba) extends generally along a vertical plane including the optical axis (Ax),
the mirror member (28A, 28B) of the first (20A) and second lamp unit (20B), respectively, reflects part of the reflected light from the reflector (26A, 26B) towards the left and the right side, respectively, and
the vehicular illumination lamp (10) further comprises a first (50A) and a second swivel mechanism (50B) that swivels the first (20A) and the second lamp unit (20B), respectively, in a horizontal direction.

2. The vehicular illumination lamp according to claim 1, **characterized in that**:
the front end edge (28Aa1, 28Ba1) of the reflective surface (28Aa, 28Ba) in each of the mirror members (28A, 28B) includes a lower vertical portion extending generally directly downward from the rear side focal point (F) of each of the projection lens (22), a horizontal portion extending generally directly rearward from an upper end position of the lower vertical portion, and an upper vertical portion extending generally directly upward from a rear end position of the horizontal portion;
the mirror member (28A) of the first lamp unit (20A) is formed with an upward reflective surface (28Aa) extending generally horizontally toward the right side from the horizontal portion on the front end edge (28Aa1) of the reflective surface (28Aa) of the mirror member (28A); and
the mirror member (28B)of the second lamp unit (20B) is formed with an upward reflective surface (28Ba) extending generally horizontally toward the left side from the horizontal portion on the front end edge (28Ba1) of the reflective surface (28Ba) of the mirror member (28B).

## Patentansprüche

1. Fahrzeugscheinwerfer (10), der derart ausgestaltet ist, dass er ein zusätzliches Lichtverteilungsmuster zusätzlich zu einem Abblendlicht-Verteilungsmuster ausbildet, wenn ein Fernlicht-Verteilungsmuster ausgebildet ist, und aufweisend:
eine erste Lampeneinheit (20A) mit:
einer Projektionslinse (22), die auf einer optischen Achse (Ax) angeordnet ist, die sich in einer Fahrzeuglängsrichtung erstreckt;
einem lichtemittierenden Element (24A), das in der Umgebung der optischen Achse (Ax) auf einer Rückseite eines rückseitigen Brennpunkts (F) der Projektionslinse (22) angeordnet ist;
einem Reflektor (26A) der derart angeordnet ist, dass er das lichtemittierende Element (24A) bedeckt und der Licht von dem lichtemittierenden Element (24A) in eine Richtung näher zu der optischen Achse (Ax), zu der Vorderseite hin reflektiert; und
einem Spiegelelement (28A) das zwischen dem Reflektor (26A) und der Projektionslinse (22) angeordnet ist und das einen Teil, des von dem Reflektor (26A) reflektierten Lichts reflektiert, wobei das Spiegelelement (28A) eine reflektierende Fläche (26Aa) aufweist und eine Vorderendkante (28Aa1) der reflektierenden Fläche (26Aa) durch den rückseitigen Brennpunkt (F) der Projektionslinse läuft;
eine zweite Lampeneinheit (20B) mit:
einer Projektionslinse (22), die auf einer optischen Achse (Ax) angeordnet ist, die sich in der Fahrzeuglängsrichtung erstreckt;
einem lichtemittierenden Element (24B), das in der Umgebung der optischen Achse (Ax) auf einer Rückseite eines rückseitigen Brennpunkts (F) der Projektionslinse (22) angeordnet ist;
einem Reflektor (26B), der derart angeordnet ist, dass er das lichtemittierende Element (24B) bedeckt und der Licht von dem lichtemittierenden Element (24B) in eine Richtung näher zu der optischen Achse (Ax), zu der Vorderseite hin reflektiert; und
einem Spiegelelement (28B), das zwischen dem Reflektor (26B) und der Projektionslinse (22) angeordnet ist und das einen Teil, des von dem Reflektor (26B) reflektierten Lichts reflektiert, wobei das Spiegelelement (28B) eine reflektierende Fläche (26Ba) aufweist und eine Vorderendkante (28Ba1) der reflektierenden Fläche (26Ba) durch den rückseitigen Brennpunkt (F) der Projektionslinse (22) läuft; und **dadurch gekennzeichnet, dass**
das lichtemittierenden Element (24A, 24B) der ersten (20A) bzw. der zweiten Lampeneinheit (20B) zu einer linken bzw. rechten Seite hin gewandt ist;
der Reflektor (26A, 26B) der ersten (20A) bzw. der zweiten Lampeneinheit (20B) das lichtemittierende Element (24A, 24B) von der linken bzw. der rechten Seite bedeckt,
das Spiegelelement (28A) der ersten Lampeneinheit (20A) so ausgebildet ist, dass sich dessen reflektierende Fläche (26Aa) allgemein entlang einer vertikalen Ebene erstreckt, welche die optische Achse (Ax) aufweist, und
das Spiegelelement (28B) der zweiten Lampeneinheit (20B) so ausgebildet ist, dass sich dessen reflektierende Fläche (26Ba) allgemein entlang einer vertikalen Ebene erstreckt, welche die optische Achse (Ax) aufweist,
das Spiegelelement (28A, 28B) der ersten (20A) bzw. der zweiten Lampeneinheit (20B) einen Teil des, von dem Reflektor (26A, 26B) reflektierten Lichts zu der linken bzw. der rechten Seite hin reflektiert, und
der Fahrzeugscheinwerfer (10) ferner einen ersten (50A) und einen zweiten Schwenkmechanismus (50B) aufweist, der die erste (20A) bzw. die zweiten Lampeneinheit (20B) in einer horizontalen Richtung schwenkt.

2. Fahrzeugscheinwerfer nach Anspruch 1, **dadurch gekennzeichnet, dass**:
die Vorderendkante (28Aa1, 28Ba1) der reflektierenden Fläche (28Aa, 28Ba) in jedem der Spiegelelemente (28A, 28B) einen unteren vertikalen Abschnitt, der sich allgemein von dem rückseitigen Brennpunkt (F) jeder der Projektionslinsen (22) direkt nach unten erstreckt, einen horizontaler Abschnitt, der sich allgemein von einer oberen Endposition des unteren vertikalen Abschnitts direkt nach hinten erstreckt und einen oberer vertikalen Abschnitt aufweist, der sich allgemein von einer Rückendposition des horizontalen Abschnitts direkt nach oben erstreckt;
das Spiegelelement (28A) der ersten Lampeneinheit (20A) mit einer aufwärts reflektierenden Fläche (28Aa) ausgebildet ist, die sich allgemein horizontal von dem horizontalen Abschnitt an der Vorderendkante (28Aa1) der reflektierenden Fläche (28Aa) des Spiegelelements (28A) zu der rechten Seite hin erstreckt; und
das Spiegelelement (28B) der zweiten Lampeneinheit (20B) mit einer aufwärts reflektierenden Fläche (28Ba) ausgebildet ist, die sich allgemein horizontal von dem horizontalen Abschnitt an der Vorderendkante (28Ba1) der reflektierenden Fläche (28Ba) des Spiegelelements (28B) zu der linken Seite hin erstreckt.

## Revendications

1. Lampe d'éclairage véhiculaire (10) configurée de manière à former un motif de distribution de lumière supplémentaire en plus d'un motif de distribution de feux de croisement quand un motif de distribution de feux de route est formé, et comprenant
une première unité de lampe (20A) incluant :
une lentille de projection (22) disposée sur un axe optique (Ax) s'étendant dans une direction longitudinale du véhicule ;
un élément électroluminescent (24A) disposé à proximité de l'axe optique (Ax) sur un côté arrière d'un point focal de côté arrière (F) de la lentille de projection (22) ;
un réflecteur (26A) qui est disposé de manière à couvrir l'élément électroluminescent (24A) et qui réfléchit de la lumière depuis l'élément électroluminescent (24A) dans une direction plus proche de l'axe optique (Ax) vers l'avant ; et
un élément de miroir (28A) qui est disposé entre le réflecteur (26A) et la lentille de projection (22) et qui réfléchit une partie de la lumière réfléchie depuis le réflecteur (26A), l'élément de miroir (28A) ayant une surface réfléchissante (26Aa) et un bord d'extrémité avant (28Aa1) de la surface réfléchissante (26Aa) passe à travers le point focal de côté arrière (F) de la lentille de projection ;
une deuxième unité de lampe (20B) incluant :
une lentille de projection (22) disposée sur un axe optique (Ax) s'étendant dans la direction longitudinale du véhicule ;
un élément électroluminescent (24B) disposé à proximité de l'axe optique (Ax) sur un côté arrière d'un point focal de côté arrière (F) de la lentille de projection (22) ;
un réflecteur (26B) qui est disposé de manière à couvrir l'élément électroluminescent (24B) et qui réfléchit de la lumière depuis l'élément électroluminescent (24B) dans une direction plus proche de l'axe optique (Ax) vers l'avant ; et
un élément de miroir (28B) qui est disposé entre le réflecteur (26B) et la lentille de projection (22) et qui réfléchit une partie de la lumière réfléchie depuis le réflecteur (26B), l'élément de miroir (28B) ayant une surface réfléchissante (26Ba) et un bord d'extrémité avant (28Ba1) de la surface réfléchissante (26Ba) passe à travers le point focal de côté arrière (F) de la lentille de projection (22) ; et **caractérisée en ce que**
l'élément électroluminescent (24A, 24B) de la première (20A) et de la deuxième unité de lampe (20B), respectivement, fait face à un côté gauche et un côté droit, respectivement,
le réflecteur (26A, 26B) de la première (20A) et de la deuxième unité de lampe (20B), respectivement, couvre l'élément électroluminescent (24A, 24B) depuis le côté gauche et le côté droit, respectivement,
l'élément de miroir (28A) de la première unité de lampe (20A) étant formé de manière à ce que sa surface réfléchissante (26Aa) s'étende généralement le long d'un plan vertical incluant l'axe optique (Ax),
et l'élément de miroir (28B) de la deuxième unité de lampe (20B) étant formé de manière à ce que sa surface réfléchissante (26Ba) s'étende généralement le long d'un plan vertical incluant l'axe optique (Ax),
l'élément de miroir (28A, 28B) de la première (20A) et de la deuxième unité de lampe (20B), respectivement, réfléchit une partie de la lumière réfléchie depuis le réflecteur (26A, 26B) vers le côté gauche et le côté droit, respectivement, et
la lampe d'éclairage véhiculaire (10) comprend en outre un premier (50A) et un deuxième mécanisme de pivotement (50B) qui pivote la première (20A) et la deuxième unité de lampe (20B), respectivement, dans une direction horizontale.

2. Lampe d'éclairage véhiculaire selon la revendication 1, **caractérisée en ce que** :
le bord d'extrémité avant (28Aal, 28Bal) de la surface réfléchissante (28Aa, 28Ba) dans chacun des éléments de miroir (28A, 28B) inclut une partie verticale inférieure s'étendant généralement directement vers le bas depuis un point focal de côté arrière (F) de chacun de la lentille de projection (22), une partie horizontale s'étendant généralement directement vers l'arrière depuis une position d'extrémité supérieure de la partie verticale inférieure, et une partie verticale supérieure s'étendant généralement directement vers le haut depuis une position d'extrémité arrière de la partie horizontale ;
l'élément de miroir (28A) de la première unité de lampe (20A) est formé avec une surface réfléchissante tournée vers le haut (28Aa) s'étendant généralement horizontalement vers le côté droit depuis la partie horizontale sur le bord d'extrémité avant (28Aa1) de la surface réfléchissante (28Aa) de l'élément de miroir (28A) ; et
l'élément de miroir (28B) de la deuxième unité de lampe (20B) est formé avec une surface réfléchissante tournée vers le haut (28Ba) s'étendant généralement horizontalement vers le côté gauche depuis la partie horizontale sur le bord d'extrémité avant (28Ba1) de la surface réfléchissante (28Ba) de l'élément de miroir (28B).
